# EUROPEAN PATENT SPECIFICATION

(11) **EP 0 459 264 B1**
(45) Date of publication and mention of the grant of the patent: **08.02.1995**
(21) Application number: 91108123.0
(22) Date of filing: 20.05.1991
(51) Int. Cl.: C08F 10/00, C08F 4/602

(54) **Method for preparing syndiotactic poly (alpha-olefin)**
Verfahren zur Herstellung eines syndiotaktischen Polyalphaolefins
Procédé de préparation de poly(alpha-oléphine) syndiotactique

(30) Priority: 24.05.1990 JP 132713/90
(43) Date of publication of application: 04.12.1991
(73) Proprietor: MITSUI TOATSU CHEMICALS, Inc., Chiyoda-Ku Tokyo 100 (JP)
(72) Inventor: Asanuma, Tadashi, Takaishi-shi, Osaka-fu (JP); Sugimoto, Ryuichi, Takaishi-shi, Osaka-fu (JP); Iwatani, Tutomu, Takaishi-shi, Osaka-fu (JP); Uchida, Osamu, Takaishi-shi, Osaka-fu (JP); Takeuchi, Katsumi, Takaishi-shi, Osaka-fu (JP)
(74) Representative: Schüler, Horst, Dr.

(56) References cited:
- EP-A- 0 287 666
- JOURNAL OF THE AMERICAN CHEMICAL SOCIETY. vol. 110, 1988, GASTON, PA US pages6255 - 6256; J.A.EWEN: 'SYNDIOSPECIFIC PROPYLENE POLYMERIZATION WITH GROUP 4METALLOCENES.'

## Description

### BACKGROUND OF THE INVENTION

### (a) Field of the Invention

The present invention relates to a method for preparing a poly(α-olefin) having a syndiotactic structure. More specifically, it relates to a method for preparing a poly(α-olefin) by the use of a catalytic system in which a relatively small amount of an expensive aluminoxane is used.

### (b) Description of the Related Art

A syndiotactic polypropylene has been known for a long period of time. Such a polypropylene is prepared by polymerization at a low temperature in the presence of a conventional catalyst comprising a vanadium compound, an ether and an organic aluminum compound, but the polypropylene prepared by this process is poor in syndiotacticity and therefore it is scarcely considered that the thus prepared polypropylene exerts its inherent syndiotactic characteristics.

On the contrary, a polypropylene having a good tacticity, i.e., a syndiotactic pentad fraction of more than 0.7 has been discovered for the first time by J. A. Ewen et al. which can be obtained by the use of a catalyst comprising a transition metal compound having asymmetric ligands and an aluminoxane [J. Am. Chem. Soc., 110, 6255-6256 (1988)].

The present inventors have found that a poly(α-olefin) having a syndiotactic structure can be likewise obtained by polymerizing another α-olefin by the similar process.

The above-mentioned J. A. Ewen et al. method is excellent, because the activity of the catalyst per unit weight of the transition metal is good and the tacticity of the obtained polymer is high. However, in this method, it is required that the aluminoxane is usually used in a ratio of 1000 mols or more per mol of the transition metal, and thus it cannot be considered that the activity of the catalyst per unit weight of the aluminoxane is sufficiently high. In addition, since the aluminoxane is expensive, the obtained syndiotactic polypropylene is also expensive. The aluminoxane is difficult to be removed from the polymer, as compared with a usual alkyl aluminum, and in case that it is necessary to decrease the residue of the catalyst, the method used for removing the alkyl aluminum is scarcely applicable.

On the contrary, a method has been suggested in which a polymer having good granular properties is obtained in a high yield by (co)polymerizing an α-olefin, particularly ethylene or ethylene and another α-olefin by the use of a highly active catalyst comprising a specific organic zirconium compound and a reaction mixture which comprises a reaction mixture of an aluminoxane and a trialkylaluminum and an inorganic compound having a surface hydroxyl group (Japanese Patent Laid-open No. 61-276805). However, in the above-mentioned catalyst, a molar ratio of trialkylaluminum to the aluminoxane is 1 or less, particularly from 0.1 to 0.5, and the amount of the aluminoxane to the transition metal compound is not decreased.

Furthermore, a (co)polymerization process of an α-olefin has been suggested in which there is used a catalyst comprising a transition metal compound in the group IVb of the periodic table, 3 milligram atom/liter or less of an aluminoxane in terms of an aluminum atom in a reaction system and an organic aluminum compound having a hydrocarbon group other than an n-alkyl group (Japanese Patent Laid-open No. 63-178108). However, this catalyst is only suitable for the preparation of a polymer not having steric regularity such as a (co)polymer of ethylene or ethylene and α-olefin, and it is necessary that the organic aluminum has the hydrocarbon group other than the n-alkyl group.

### SUMMARY OF THE INVENTION

An object of the present invention is to provide a method for preparing a poly(α-olefin) having a high syndiotacticity with a high productivity by the use of a catalyst containing a relatively small amount of an aluminoxane.

A method for preparing a syndiotactic poly(α-olefin) of the present invention comprises polymerizing an α-olefin in the presence of a catalyst consisting substantially of a transition metal compound having asymmetric ligands, an aluminoxane and a trialkylaluminum represented by the formula 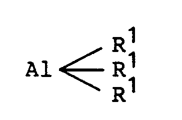
(wherein R¹ is an alkyl group having 2 to 12 carbon atoms), a molar ratio of the transition metal compound having the asymmetric ligands to the aluminoxane being from 1:10 to 1:500, a molar ratio of the transition metal compound to the trialkylaluminum being from 1:500 to 1:5000.

### DESCRIPTION OF THE PREFERRED EMBODIMENTS

A transition metal compound having asymmetric ligands which is used in the present invention is preferably represented by the formula 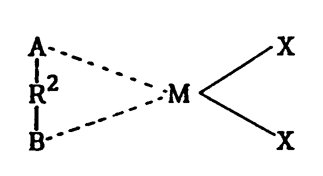
(wherein A and B are mutually different cyclic unsaturated hydrocarbon residues, R² is a hydrocarbon residue having 1 to 20 carbon atoms or a group containing silicon or germanium which connects A with B, X is a halogen atom or a hydrocarbon residue having 1 to 20 carbon atoms, and M is a metal atom selected from the group consisting of titanium, zirconium and hafnium).

Examples of A and B include monocyclic and polycyclic unsaturated hydrocarbon groups having 5 to 30 carbon atoms, and typical examples thereof include a cyclopentadienyl group, cyclopentadienyl groups in which a part or all of hydrogen atoms are substituted by alkyl groups having 1 to 10 carbon atoms (the terminal of this alkyl group may also be bonded to the cyclopentadiene ring), polycyclic aromatic hydrocarbon groups such as an indenyl group and a fluorenyl group, and polycyclic aromatic hydrocarbon groups in which a part or all of hydrogen atoms are substituted by alkyl groups having 1 to 10 carbon atoms.

Preferable examples of R² include a dialkylmethylene group, a dialkylsilylene group and a dialkylgerylene group, and for example, there can be used compounds represented by (R⁴)₂C〈, (R⁴)₂Si〈 and (R⁴)₂Ge〈 (wherein R⁴ is hydrogen or an alkyl group having 1 to 20 carbon atoms, and the two R⁴s may be identical or different and may be mutually bonded), and an ethylene group represented by -C(R⁴)₂-C(R⁴)₂- (wherein R⁴ is as defined above). Examples of X include fluorine, chlorine, bromine, iodine, alkyl groups such as methyl, ethyl, propyl and butyl, and an aromatic compound such as a cyclopentadienyl group. In particular, chlorine and the methyl group are preferable.

Typical examples of the above-mentioned transition metal compound include isopropylidene(cyclopentadienylfluorenyl)zirconium dichloride and isopropylidene(cyclopentadienylfluorenyl)hafnium dichloride mentioned in the above J. A. Ewen et al. literature, and methylphenylene(cyclopentadienylfluorenyl)zirconium dichloride, methylphenylmethylene(cyclopentadienylfluoenyl)hafnium dichloride, diphenylmethylene(cyclopentadienylfluorenyl)zirconium dichloride and diphenylmethylene(cyclopentadienylfluorenyl)hafnium dichloride mentioned in EP 387690 and EP 387691.

Examples of the aluminoxane include compounds represented by the formula 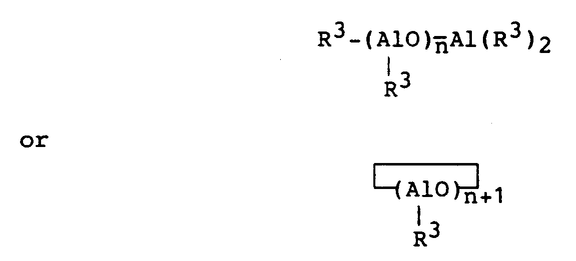
(wherein R³ is a hydrocarbon residue having 1 to 3 carbon atoms, and n is an integer of from 1 to 50). The aluminoxane in which R³ is a methyl group and n is an integer of 5 or more is particularly preferable.

The usable trialkylaluminum is represented by the formula 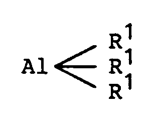
(wherein R¹ is an alkyl group having 2 to 12 carbon atoms), and it may be mixed with another alkylaluminum. Typical examples of the trialkylaluminum include compounds of the above formula in which R¹ is ethyl, propyl, butyl, pentyl, hexyl, heptyl or octyl. This kind of alkyl group is preferably a straight-chain group such as n-propyl, n-butyl, n-pentyl, n-hexyl, n-heptyl or n-octyl. In the present invention, trimethylaluminum is not preferable.

The amount of the aluminoxane to be used is from 10 to 500 mols, preferably 50 to 500 mols per mol of the transition metal compound having asymmetric ligands. When the amount of the aluminoxane is more than 500 mols per mol of the transition metal compound, the decrease of the expensive aluminoxane is insufficient, and when it is less than 10 mols, the activity of the catalyst is unpreferably low. Most preferably, the amount of the aluminoxane is from 100 to 400 mols per mol of the transition metal compound.

The amount of the alkylaluminum to be used is preferably from 500 to 5000 mols per mol of the transition metal compound. When the amount of the alkylaluminum is less than 500 mols, the effect of activity improvement is poor, and when it is more than 5000 mols, any further effect cannot be expected any more and the activity deteriorates unexpectedly in certain cases. Most preferably, the amount of the alkylaluminum is from 1000 to 4000 mols per mol of the transition metal compound.

In the present invention, the α-olefin having 3 to 25 carbon atoms is preferable, and typical examples thereof include straight-chain α-olefins such as propylene, butene-1, pentene-1, hexene-1, heptene-1, octene-1, nonene-1, decene-1, undecene-1, dodecene-1, tridecene-1, tetradecene-1, pentadecene-1, hexadecene-1 and octadecene-1, and branched α-olefins such as 3-methylbutene-1, 4-methylpentene-1 and 4,4-dimethylpentene-1. These α-olefins can be used singly or in a mixture thereof, and they may be mixed with a small amount of ethylene, when used.

No particular restriction is put on polymerization conditions, and various polymerization techniques are utilizable such as solvent polymerization using an inert medium, bulk polymerization in which there is substantially no inert medium, and gas phase polymerization. Preferably, the polymerization temperature is from -100 to 200°C and the polymerization pressure is from atmospheric pressure to 100 kg/cm² (gauge) (1 kg/cm² = 0.981 bar). More preferably, the temperature is from -100 to 100°C and the pressure is from atmospheric pressure to 50 kg/cm² (gauge).

In the thus obtained poly(α-olefin), an intrinsic viscosity measured in a tetralin solution at 135°C is usually from 0.05 to 10 dl/g, and a ratio of the weight average molecular weight to the number average molecular weight of the polymer is usually from 1.5 to 15. The intrinsic viscosity and the molecular weight distribution can be adjusted to desirable values in compliance with a purpose.

The syndiotactic poly(α-olefin) obtained in accordance with the method of the present invention is excellent in balance between stiffness and impact resistance and can provide molded products having excellent transparency. Thus, this kind of syndiotactic poly(α-olefin) is different from an isotactic poly(α-olefin) in characteristics.

In the present invention, it is effective that polymerization is carried out at a low temperature of 100°C or less by the use of a catalyst containing a transition metal compound purified to a high purity (90% or more) in order to further improve the syndiotacticity of the obtained polymer, and it is also effective that the obtained polymer is washed with a hydrocarbon solvent.

Examples of the hydrocarbon solvent include hydrocarbon compounds having 3 to 20 carbon atoms, for example, saturated hydrocarbon compounds such as propylene, propane, butane, pentane, hexane, heptane, octane and nonane, aromatic hydrocarbon compounds such as benzene, toluene, xylene and ethylbenzene, and these compounds in which a part of all of hydrogen atoms are substituted by fluorine, chlorine, bromine or iodine. Examples of other usable solvents include alcohols having 1 to 20 carbon atoms and ethers and esters having 2 to 20 carbon atoms which can dissolve or disperse a low-molecular atactic component therein. No particular restriction is put on a washing manner, and the washing is usually carried out at a temperature of from 0 to 100°C.

The present invention will be described in detail in reference to examples and comparative examples. However, these examples intend to elucidate the present invention, and they should not be construed to be restrictive.

### Example 1

1 mg of isopropyl(cyclopentadienyl-1-fluorenyl)zirconium dichloride, 0.027 g [200 mols per mol of isopropyl(cyclopentadienyl-1-fluorenyl)zirconium dichloride] of methylaluminoxane (polymerization degree 16.2) made by Toso Akzo Co., Ltd and 0.67 g [2000 mols per mol of (cyclopentadienyl-1-fluorenyl)zirconium dichloride] of triethylaluminum were dissolved in 50 ml of toluene, and the mixture was then placed in an autoclave. This isopropyl(cyclopentadienyl-1-fluorenyl)zirconium dichloride was obtained by converting, into a lithium salt, isopropylcyclopentadienyl-1-fluorene synthesized in an ordinary manner, and then reacting the same with zirconium tetrachloride. Afterward, 1.5 kg of propylene was put in the autoclave, and temperature was elevated and polymerization was then carried out at 50°C for 2 hours.

After the polymerization, unreacted propylene was purged, and the resultant powder was taken out, dried and then weighed, whereby 210 g of a polypropylene was obtained.

According to ¹³C-NMR, the syndiotactic pentad fraction of this polypropylene was 0.84, and an intrinsic viscosity (hereinafter referred to as "η") measured in a tetralin solution at 135°C was 0.86. Furthermore, a ratio of the weight average molecular weight to the number average molecular weight (hereinafter referred to as "Mw/Mn") of the polymer measured in 1,2,4-trichlorobenzene was 2.3.

### Comparative Example 1

The same procedure as in Example 1 was effected except that no triethylaluminum was used in polymerization, and as a result, 5.1 g of a syndiotactic polypropylene was merely obtained. Furthermore, according to ¹³C-NMR, the syndiotactic pentad fraction of this polypropylene was 0.62, its η was 0.94, and its Mw/Mn was 2.7.

### Comparative Example 2

The same procedure as in Example 1 was effected except that polymerization was carried out using 0.27 g of methylaluminoxane without triethylaluminum, and as a result, 315 g of a polypropylene was obtained.

In the thus obtained polypropylene, a syndiotactic pentad fraction of was 0.85, η was 1.09, and Mw/Mn was 2.1.

### Example 2

The same procedure as in Example 1 was effected except that triethylaluminum was replaced with triisobutylaluminum, thereby obtaining 285 g of a polypropylene. In the thus obtained polypropylene, a syndiotactic pentad fraction was 0.84, η was 1.19, and Mw/Mn was 2.2.

### Example 3

The same procedure as in Example 2 was effected except that triisobutylaluminum was replaced with tri-n-butylaluminum, thereby obtaining 362 g of a polypropylene. In this polypropylene, a syndiotactic pentad fraction was 0.86, η was 1.15, and Mw/Mn was 2.1.

### Comparative Example 3

The same procedure as in Example 2 was effected except that triisobutylaluminum was replaced with trimethylaluminum, but in this case, a polymer was scarcely obtained.

### Example 4

The same procedure as in Example 1 was effected except that amounts of triethylaluminum were 550 mols, 1000 mols, 3000 mols, 4000 mols and 5000 mols, and polypropylenes were obtained in amounts of 10 g (syndiotactic pentad fraction was 0.82, and η was 1.08), 15 g (syndiotactic pentad fraction was 0.81, and η was 1.12), 205 g (syndiotactic pentad fraction was 0.85, and η was 1.02), 195 g (syndiotactic pentad fraction was 0.83, and η was 0.92), and 200 g (syndiotactic pentad fraction was 0.84, and η was 0.88), respectively.

### Comparative Example 4

The same procedure as in Example 3 was effected except that the amount of triethylaluminum was 450 mols, thereby obtaining 8 g of a polypropylene in which a syndiotactic pentad fraction was 0.65 and η was 0.92.

### Example 5

The same procedure as in Example 1 was effected except that amounts of methylaluminoxane were 10 mols, 50 mols, 100 mols, 400 mols and 450 mols, so that polymers were obtained in amounts of 11 g, 30 g, 150 g, 230 g and 215 g, respectively. These polymers had syndiotactic pentad fractions of 0.80, 0.80, 0.81, 0.83 and 0.84, respectively as well as ηs of 1.02, 1.08, 1.01, 0.93 and 0.89, respectively.

### Comparative Example 5

The same procedure as in Example 4 was effected except that the amount of methylaluminoxane was 5 mols, but in this case, a polymer was scarcely obtained.

### Example 6

The same procedure as in Example 1 was effected except that propylene was replaced with 4-methylpentene-1 and octene-1, obtaining 1.2 g of poly(4-methylpentene-1) and 2.8 g of poly(octene-1). These polymers had ηs of 0.21 and 0.23, respectively. According to ¹³C-NMR, it was confirmed that each of these polymers had a syndiotactic structure.

### Example 7

The same procedure as in Example 1 was effected except that in place of propylene, propylene and butene-1 were copolymerized in a weight ratio of 85:15, thereby obtaining 115 g of a copolymer. In this copolymer, the content of propylene units was 91% by weight and η was 1.05. Furthermore, a ratio of a peak intensity observed at 20.2 ppm in accordance with ¹³C-NMR to the total peak intensity attributed to the methyl groups of propylene was 0.68.

According to the method of the present invention, a poly(α-olefin) having a high tacticity can be prepared in a high yield per unit weight of a transition metal of a catalyst system by the use of a catalyst which permits decreasing the amount of an expensive aluminoxane to be used.

## Claims

1. A method for preparing (co)polymer of an α-olefin having a syndiotactic structure which comprises the step of polymerizing said α-olefin in the presence of a catalyst consisting substantially of a transition metal compound having asymmetric ligands, an aluminoxane and an alkylalumin represented by the formula 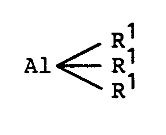 (wherein R¹ is an alkyl group having 2 to 12 carbon atoms), a molar ratio of said transition metal compound having the asymmetric ligands to said aluminoxane being from 1:10 to 1:500, a molar ratio of said transition metal compound having the asymmetric ligands to said alkylaluminum being from 1:500 to 1:5000.

2. The method according to Claim 1 wherein said molar ratio of said transition metal compound having the asymmetric ligands to said aluminoxane is from 1:50 to 1:500.

3. The method according to Claim 1 wherein said molar ratio of said transition metal compound having the asymmetric ligands to said aluminoxane is from 1:100 to 1:400.

4. The method according to Claim 1 wherein said transition metal compound having the asymmetric ligands is a compound represented by the formula 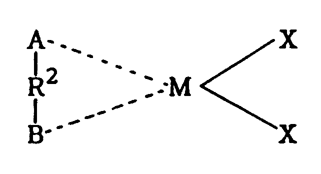 (wherein A and B are mutually different cyclic unsaturated hydrocarbon residues, R² is a hydrocarbon residue having 1 to 20 carbon atoms or a group containing silicon or germanium which connects A with B, X is a halogen atom or a hydrocarbon residue having 1 to 20 carbon atoms, and M is a metal atom selected from the group consisting of titanium, zirconium and hafnium).

5. The method according to Claim 1 wherein said aluminoxane is a compound represented by the formula 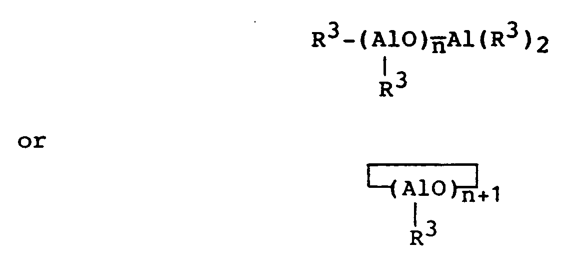 (wherein R³ is a hydrocarbon residue having 1 to 3 carbon atoms, and n is an integer of from 1 to 50).

6. The method according to Claim 1 wherein the alkyl group of said trialkylaluminum is a straight-chain or a branched alkyl group.

7. The method according to Claim 1 wherein said α-olefin is one of straight-chain and branched α-olefins having 3 to 25 carbon atoms, a mixture thereof, or a mixture of them and ethylene.

## Patentansprüche

1. Ein Verfahren zur Herstellung von (Co)Polymer von einem α-Olefin mit einer syndiotaktischen Struktur, das den Schritt umfaßt, daß das α-Olefin in Anwesenheit eines Katalysators polymerisiert wird, der im wesentlichen aus einer Übergangsmetallverbindung mit asymmetrischen Liganden, einem Aluminoxan und einem Alkylaluminium, das durch die Formel 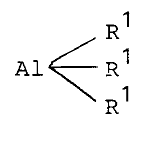 dargestellt wird (worin R¹ eine Alkylgruppe mit 2 bis 12 Kohlenstoffatomen ist) besteht, wobei ein molares Verhältnis der Übergangsmetallverbindung mit den asymmetrischen Liganden zu dem Aluminoxan von 1:10 bis 1:500 beträgt, ein molares Verhältnis der Übergangsmetallverbindung mit den asymmetrischen Liganden zu dem Alkylaluminium von 1:500 bis 1:5000 beträgt.

2. Das Verfahren nach Anspruch 1, bei dem das molare Verhältnis der Übergangsmetallverbindung mit den asymmetrischen Liganden zu dem Aluminoxan 1:50 bis 1:500 ist.

3. Das Verfahren nach Anspruch 1, bei dem das molare Verhältnis der Übergangsmetallverbindung mit den asymmetrischen Liganden zu dem Aluminoxan 1:100 bis 1:400 ist.

4. Das Verfahren nach Anspruch 1, bei dem die Übergangsmetallverbindung mit den asymmetrischen Liganden eine Verbindung ist, die durch die Formel 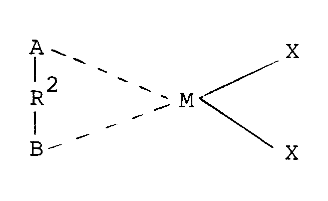 dargestellt wird (worin A und B in Bezug aufeinander unterschiedliche zyklische ungesättigte Kohlenwasserstoffreste sind, R² ein Kohlenwasserstoffrest mit 1 bis 20 Kohlenstoffatomen oder eine Gruppe, die Silizium oder Germanium enthält, ist, die A mit B verbindet, X ein Halogenatom oder ein Kohlenwasserstoffrest mit 1 bis 20 Kohlenstoffatomen ist und M ein Metallatom ist, das aus der Gruppe ausgewählt ist, die aus Titan, Zirkon und Hafnium besteht).

5. Das Verfahren nach Anspruch 1, bei dem das Aluminoxan eine Verbindung ist, die durch die Formel 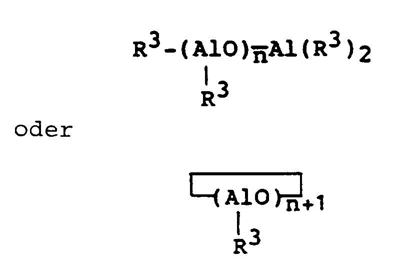 dargestellt wird (worin R³ ein Kohlenwasserstoffrest mit 1 bis 3 Kohlenstoffatomen ist und n eine ganze Zahl von 1 bis 50 ist).

6. Das Verfahren nach Anspruch 1, bei dem die Alkylgruppe des Trialkylaluminiums eine geradkettige oder eine verzweigte Alkylgruppe ist.

7. Das Verfahren nach Anspruch 1, bei dem das α-Olefin eines der geradkettigen und verzweigten α-Olefine mit 3 bis 25 Kohlenstoffatomen, eine Mischung derselben oder eine Mischung von ihnen und Ethylen ist.

## Revendications

1. Procédé de préparation d'un (co)polymère d'une α-oléfine ayant une structure syndiotactique qui comprend l'étape de polymérisation de ladite α-oléfine en présence d'un catalyseur consistant essentiellement en un composé de métal de transition ayant des ligands asymétriques, un aluminoxane et un alkylaluminium représenté par la formule: 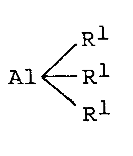 (où R¹ est un groupe alkyle ayant 2 à 12 atomes de carbone), le rapport molaire dudit composé de métal de transition ayant les ligands asymétriques audit aluminoxane étant de 1:10 à 1:500, le rapport molaire dudit composé de métal de transition ayant les ligands asymétriques audit alkylaluminium étant de 1:500 à 1:5000.

2. Procédé selon la revendication 1, dans lequel ledit rapport molaire dudit composé de métal de transition ayant les ligands asymétriques audit aluminoxane est de 1:50 à 1:500.

3. Procédé selon la revendication 1, dans lequel ledit rapport molaire dudit composé de métal de transition ayant les ligands asymétriques audit aluminoxane est de 1:100 à 1:400.

4. Procédé selon la revendication 1, dans lequel ledit composé de métal de transition ayant les ligands asymétriques est un composé représenté par la formule: 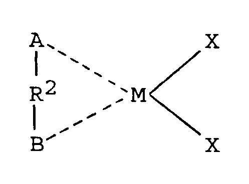 (où A et B sont des résidus hydrocarbonés insaturés cycliques mutuellement différents, R² est un résidu hydrocarboné ayant 1 à 20 atomes de carbone ou un groupe contenant du silicium ou du germanium qui relie A à B, X est un atome d'halogène ou un résidu hydrocarboné ayant 1 à 20 atomes de carbone, et M est un atome de métal choisi dans le groupe consistant en le titane, le zirconium et le hafnium).

5. Procédé selon la revendication 1, dans lequel ledit aluminoxane est un composé représenté par la formule: 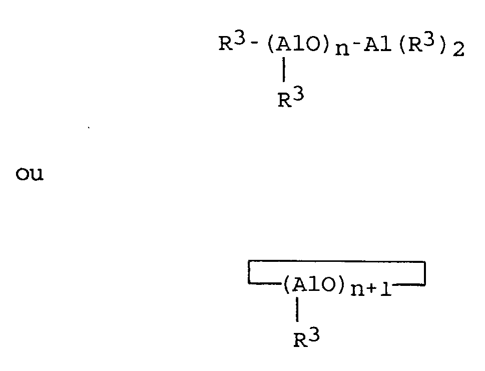 (où R³ est un résidu hydrocarboné ayant 1 à 3 atomes de carbone et n est un entier de 1 à 50).

6. Procédé selon la revendication 1, dans lequel le groupe alkyle dudit trialkylaluminium est un groupe alkyle linéaire ou ramifié.

7. Procédé selon la revendication 1, dans lequel ladite α-oléfine est une α-oléfine parmi les α-oléfines linéaires et les α-oléfines ramifiées ayant 3 à 25 atomes de carbone, un mélange de celles-ci ou un mélange de celles-ci et d'éthylène.
